## Europäisches Patentamt

## European Patent Office

## Office européen des brevets

(11) Veröffentlichungsnummer: **0 357 022**
**A2**

(12) # EUROPÄISCHE PATENTANMELDUNG

(21) Anmeldenummer: **89115986.5**

(22) Anmeldetag: **30.08.89**

(51) Int. Cl.⁵: **B29D 23/22**

(30) Priorität: **31.08.88 DE 3829459**

(43) Veröffentlichungstag der Anmeldung:
**07.03.90 Patentblatt 90/10**

(84) Benannte Vertragsstaaten:
**AT BE DE FR GB IT NL**

(71) Anmelder: **Continental AG**
**Königsworther Platz 1 Postfach 1 69**
**D-3000 Hannover 1(DE)**

(72) Erfinder: **Mahling, Rolf, Dipl.-Chem.**
**Leipziger Strasse 18**
**D-3540 Korbach(DE)**

(54) Verfahren zum Herstellen formvulkanisierter Schläuche.

(57) Die Erfindung bezieht sich auf ein Verfahren zur Herstellung eines nicht armierten, ringförmigen Schlauches, der aus einer Kautschukmischung besteht, insbesondere auf ein Verfahren zur Herstellung eines Fahrradschlauches, wobei zunächst aus der Kautschukmischung ein Hohlprofil mit im wesentlichen kreisrunden Querschnitt extrudiert wird, davon pro Schlauch ein Teil mit einer Länge entsprechend der Umfangslänge des herzustellenden Schlauches abgetrennt wird, dieser Teil dann zu einem endlosen Ring gefügt wird und dieser Ring in einer mehrteiligen Form vulkanisiert wird. Um formgeheizte Schläuche billiger und mit geringerem Ausschuß zu produzieren, wird erfindungsgemäß vorgeschlagen, den unvulkanisierten Schlauch, nachdem er zu einem endlosen Ring gefügt wurde, zunächst formlos in einem Kessel bis zu einem Vulkanisationsgrad von mindestens 30% vorzuvulkanisieren und erst danach in einer mehrteiligen Form endzuvulkanisieren. Vorzugsweise erreicht die Kautschukmischung in der Vorvulkanisationsstufe einen Vulkanisationsgrad zwischen 40% bis 60%.

EP 0 357 022 A2

## Verfahren zum Herstellen formvulkanisierter Schläuche

Die Erfindung bezieht sich auf ein Verfahren zur Herstellung eines nicht armierten, ringförmigen Schlauches, der aus einer Kautschukmischung besteht, insbesondere auf ein Verfahren zur Herstellung eines Fahrradschlauches, wobei zunächst aus der Kautschukmischung ein Hohlprofil mit im wesentlichen kreisrunden Querschnitt extrudiert wird, davon pro Schlauch ein Teil mit einer Länge entsprechend der Umfangslänge des herzustellenden Schlauches abgetrennt wird, dieser Teil dann zu einem endlosen Ring gefügt wird und dieser Ring in einer mehrteiligen Form vulkanisiert wird. Solchermaßen hergestellte Schläuche sind den Verbrauchern als formvulkanisierte Schläuche bekannt. Weiterhin sind sogenannte Flachschläuche bekannt, die in der Weise hergestellt werden, daß die in gleicher Weise hergestellten endlosen, unvulkanisierten Schlauchringe ohne Form in einem Kessel vulkanisiert werden. Die Kautschukmischung gängiger Schläuche enthält Butylkautschuk.

Die formgeheizten Schläuche sind teuer in der Herstellung, da erstens die Formen des öfteren von festgebackenen Gummiresten gereinigt werden müssen, die Vulkanisationsformen sperrig sind und deshalb große Vulkanisationspressen erfordern, der Warendurchsatz pro Fabrikfläche also kleiner ist, da die Formen nach einer gewissen Anzahl von abrasiven Reinigungen ausgetauscht werden müssen und, weil es in der Fertigung von Formschläuchen eine hohe Ausschußquote gibt. Die hohe Ausschußquote ist insbesondere dadurch bedingt, daß das auf den unvulkanisierten Schlauch zunächst flach aufgesetzte Ventil in der gewölbten Schlauchform solche Fließbewegungen provoziert, daß örtlich in der Umgebung des Ventiles zu geringe Schlauchwandstärken sich ergeben. Andererseits ist das dynamische Verhalten von formgeheizten Schläuchen im Betrieb gegenüber den sogenannten Flachschläuchen günstiger, da sie nur in wesentlich geringerem Maße Liegefalten, an denen bevorzugt Ermüdungsrisse auftreten, aufweisen.

Der Erfindung liegt die Aufgabe zugrunde, ein Verfahren zum Vulkanisieren von Schläuchen anzugeben, das preiswerter ist als das bisherige Formvulkanisationsverfahren und gleichzeitig Schläuche ergibt von ähnlicher Ermüdungsbeständigkeit wie die bekannten formgeheizten Schläuche. Die Aufgabe wird erfindungsgemäß dadurch gelöst, daß der unvulkanisierte Schlauch, nachdem er zu einem endlosen Ring gefügt wurde, zunächst formlos in einem Kessel vorvulkanisiert wird bis zu einem Vulkanisationsgrad von mindestens 30% und erst danach in einer mehrteiligen Form endvulkanisiert wird. Dadurch, daß die Schläuche zunächst in einem Kessel formlos vorvulkanisiert werden, wird die Fließfähigkeit der Kautschukmischung für die nachfolgende Formvulkanisation deutlich herabgesetzt. Dadurch sind die Wandstärkeschwankungen, die bislang beim Formheizverfahren insbesondere in der Umgebung des Ventiles auftreten, fast vollkommen beseitigt. Gegenüber dem bisherigen (einstufigen) Formheizverfahren wird der Ausschuß um etwa eine Zehnerpotenz gesenkt. Vorzugsweise sind der Temperaturverlauf über der Zeit und die Heizzeit in der Vorvulkanisationsstufe so aufeinander abgestimmt, daß die Kautschukmischung in der Vorvulkanisationsstufe einen Vulkanisationsgrad von 40% bis 60% erreicht.

Die hohen vorgeschlagenen Vulkanisationsgrade in der Vorvulkanisationsstufe lassen kürzere Heizzeiten in der nachfolgenden Formvulkanisation zu. Dadurch erreichen die platz- und kapitalintensiven Vulkanisationsformen einen höheren Mengendurchsatz. Dieser betriebswirtschaftliche Vorteil übertrifft die Kosten für das zusätzliche Handling, also für das Einhängen des unvulkanisierten Schlauches in das Aufnahmegestell des Heizkessels. Die Erfindung ist besonders leicht im Fertigungsprozeß einzuführen, weil die für die Vorvulkanisationsstufe erforderlichen Heizkessel in den meisten Gummifabriken ohnehin vorhanden sind.

Auch der für die Vulkanisation erforderliche Energieeinsatz ist gegenüber den bekannten formgeheizten Schläuchen gesenkt, da in dem Heizkessel, in dem der erste Teil der Vulkanisation bewirkt wird, das Verhältnis von wärmeabgebender Oberfläche zu dem zu heizenden Volumen wesentlich kleiner und damit günstiger ist als bei den Vulkanisationsformen, von denen nun für den gleichen Mengendurchsatz weniger Formen entsprechend dem verringerten noch zu erzielenden Restvulkanisationsgrad beheizt werden müssen.

Indessen erreichen die Schläuche nach dem erfindungsgemäßen zweistufigen Vulkanisationsverfahren praktisch die gleiche Dauerhaltbarkeit wie sie an den bisherigen Formschläuchen geschätzt wurde. Es hat sich nämlich gezeigt, daß für die Elimination der für kesselgeheizte Schläuche typischen Liegefalten, an denen sich die Alterungsrisse häufen, die Restplastizität der vorvulkanisierten Kautschukmischung noch ausreicht, wenn der Vorvulkanisationsgrad bei besonders fließwilliger Kautschukmischung 92% beträgt und bei besonders zähflüssiger Kautschukmischung 85% beträgt. Die geringen Restvulkanisationsgrade in der zweiten Stufe des erfindungsgemäßen Vulkanisationsverfahrens reichen für die weitgehende Ausbügelung der Liegefalten noch aus.

Da die Schläuche bei Einlegen in die Vulkanisationsformen nach dem erfindungsgemäßen Verfahren schon einen Mindestvulkanisationsgrad haben, sind Anbackungen von allmählich verkohlenden Kautschukresten verringert. Die Formen brauchen deshalb nur seltener gereinigt zu werden und haben deshalb eine höhere Standzeit. Besonders verschmutzungsanfällig waren Vulkanisationsformen bislang dann, wenn irgendwelche Zeichen, z.B. eine Herstellermarke, reliefartig auf der Schlauchoberfläche angebracht werden sollten. Auch dieses Problem wird mit einer solchen Weiterbildung der Erfindung gelöst, daß nämlich in den Schlauch vor der Vorvulkanisation das Markenzeichen-Relief eingeprägt wird, die Vulkanisationsform also kein Relief aufweist.

Eine der fehleranfälligsten Stellen im Herstellungsverfahren von ringförmigen Schläuchen ist die Zusammenfügung der auf Länge abgetrennten Hohlprofilteile zu endlosen Ringen. Zwecks ungestörten Rundlaufes herrschen heute solche Verfahren vor, in denen die beiden trennmittelfreien Enden, gegebenenfalls nach Einstreichen mit Klebrigkeitsverbesserern, stumpf voreinander gestoßen werden. Hierbei ist sowohl höchste Sauberkeit, damit keine Störstellen in der Vernetzung entstehen, als auch höchste Präzision, damit keine Versätze entstehen, erforderlich. Um evtl. Beanstandungen, die sich bei der Qualitätskontrolle ergeben könnten, unverzüglich in der Fertigungsorganisation berücksichtigen zu können, wird als Weiterbildung der Erfindung vorgeschlagen, daß in den Schlauch vor der Vorvulkanisation ein Kennzeichen zur Identifikation der Stumpfstoßmaschine und/oder des den Stumpfstoß ausführenden Arbeiters eingeprägt wird.

Zusammenfassend schlägt die Erfindung vor, zur Herstellung von Schläuchen in der Qualität formgeheizter Schläuche einen Teil der Vulkanisation in formloser Kesselheizung auszuführen und nur einen verkleinerten, von der Fließfähigkeit der Kautschukmischung abhängigen, Anteil der Gesamtvulkanisation in einer Form auszuführen.

## Ansprüche

1. Verfahren zur Herstellung eines nicht armierten, ringförmigen Schlauches, der aus einer Kautschukmischung besteht, insbesondere Verfahren zur Herstellung eines Fahrradschlauches, wobei zunächst aus der Kautschukmischung ein Hohlprofil mit im wesentlichen kreisrunden Querschnitt extrudiert wird, davon pro Schlauch ein Teil mit einer Länge entsprechend der Umfangslänge des herzustellenden Schlauches abgetrennt wird, dieser Teil dann zu einem endlosen Ring gefügt wird und dieser Ring in einer mehrteiligen Form vulkanisiert wird, **dadurch gekennzeichnet,** daß der unvulkanisierte Schlauch, nachdem er zu einem endlosen Ring gefügt wurde, zunächst formlos in einem Kessel vorvulkanisiert wird bis zu einem Vulkanisationsgrad von mindestens 30% und erst danach in einer mehrteiligen Form endvulkanisiert wird.

2. Verfahren nach Anspruch 1, dadurch gekennzeichnet, daß der Temperaturverlauf und die Heizzeit in der Vorvulkanisationsstufe die Kautschukmischung einen Vulkanisationsgrad von 40% bis 60% erreichen lassen.

3. Verfahren nach Anspruch 1, bei dem der Schlauch mit einem reliefartigen Markenzeichen versehen wird, dadurch gekennzeichnet, daß in den Schlauch vor der Vorvulkanisation das Markenzeichen-Relief eingeprägt wird.

4. Verfahren nach Anspruch 1, bei dem der auf Länge abgetrennte Teil des extrudierten Hohlprofiles in der Weise zu einem endlosen Ring gefügt wird, daß die beiden trennmittelfreien Enden, gegebenenfalls nach Einstreichen mit Klebrigkeitsverbesserern, stumpf voreinander gestoßen werden, dadurch gekennzeichnet, daß in den Schlauch vor der Vorvulkanisation ein Kennzeichen zur Identifikation der Stumpfstoßmaschine und/oder des den Stumpfstoß ausführenden Arbeiters eingeprägt wird.